# EUROPÄISCHE PATENTSCHRIFT

(11) **EP 2 528 879 B1**
(45) Veröffentlichungstag und Bekanntmachung des Hinweises auf die Patenterteilung: **01.01.2014**
(21) Anmeldenummer: 11702410.9
(22) Anmeldetag: 25.01.2011
(51) Int. Cl.: C04B 35/52, C04B 38/00, C03B 19/10, C03B 19/14

(54) **VERFAHREN FÜR DIE HERSTELLUNG EINES PORÖSEN KOHLENSTOFFERZEUGNISSES**
METHOD FOR THE PRODUCTION OF A POROUS CARBON PRODUCT
PROCÉDÉ DE FABRICATION D'UN PRODUIT CARBONÉ POREUX

(30) Priorität: 27.01.2010 DE 102010005954
(43) Veröffentlichungstag der Anmeldung: 05.12.2012
(73) Patentinhaber: Heraeus Quarzglas GmbH & Co. KG, 63450 Hanau (DE)
(72) Erfinder: NEUMANN, Christian, 35410 Hungen (DE)
(74) Vertreter: Staudt, Armin Walter
(86) Internationale Anmeldenummer: PCT/EP2011/050939
(87) Internationale Veröffentlichungsnummer: WO 2011/092149

(56) Entgegenhaltungen:
- WO-A1-2004/024641
- US-A1- 2004 091 415
- US-A1- 2005 169 829
- US-A1- 2010 307 197
- ZHAOHUI HOU ET AL: "High rate capability of ordered mesoporous carbon with platelet graphitic pore walls for lithium ion anodes", MATERIALS LETTERS, Bd. 65, Nr. 5, 15. Oktober 2010 (2010-10-15), Seiten 897-900, XP55006228, ISSN: 0167-577X, DOI: 10.1016/j.matlet.2010.12.008
- J. I. PAREDES ET AL: "A Microscopic View of Physical and Chemical Activation in the Synthesis of Porous Carbons", LANGMUIR, Bd. 22, Nr. 23, 1. November 2006 (2006-11-01), Seiten 9730-9739, XP55006225, ISSN: 0743-7463, DOI: 10.1021/la061330l
- SHI Z-G ET AL: "Synthesis of a silica monolith with textural pores and ordered mesopores", MICROPOROUS AND MESOPOROUS MATERIALS, ELSEVIER SCIENCE PUBLISHING, NEW YORK, US, Bd. 68, Nr. 1-3, 8. März 2004 (2004-03-08) , Seiten 55-59, XP004491290, ISSN: 1387-1811, DOI: 10.1016/J.MICROMESO.2003.12.009

## Beschreibung

Die vorliegende Erfindung betrifft ein Verfahren zur Herstellung eines porösen Kohlenstofferzeugnisses, umfassend folgende Verfahrensschritte:
(a) Herstellen eines monolithischen Templats aus anorganischem Matrixmaterial, das miteinander verbundene Poren aufweist,
(b) Infiltrieren der Poren des Templats mit Kohlenstoff oder einer Kohlenstoff-Vorläufersubstanz unter Bildung eines von Matrixmaterial umgebenen kohlenstoffhaltigen Grünkörpergerüsts, und
(c) Kalzinieren des Grünkörpergerüsts unter Bildung des porösen Kohlenstofferzeugnisses.

Außerdem geht es in der Erfindung um ein Matrixmaterial zur Verwendung als Templat zur Herstellung eines Formkörpers aus porösem Kohlenstoff.

Monolithische Formkörper aus porösem Kohlenstoff zeichnen sich im Verhältnis zu ihrer mechanischen Robustheit durch ein geringes Gewicht, hohe thermische Leitfähigkeit und Adsorptionskraft aus und sie verfügen darüber hinaus über hohe chemische und thermische Beständigkeit.

Poröser Kohlenstoff wird in Elektroden für Brennstoffzellen, Superkondensatoren und elektrischen Akkumulatoren (Sekundärbatterien) verwendet und als Adsorptionsmittel für Flüssigkeiten und Gase, als Speichermedium für Gase, als Trägermaterial in chromatographischen Anwendungen oder katalytischen Prozessen und als Werkstoff im Maschinenbau oder in der Medizintechnik eingesetzt.

### Stand der Technik

Für die Herstellung von porösem Kohlenstoff ist eine Vielzahl von Methoden bekannt, die zu unterschiedlichen Eigenschaften insbesondere hinsichtlich Porosität, Porengrößenverteilung und Morphologie der Poren führen.

So beschreibt die DE 20 2004 006 867 U1 die Herstellung eines porösen, kohlenstoffbasierten Formkörpers zur Verwendung als Zellkulturträger, indem ein Gemisch aus karbonisierbaren Kunststoffpartikeln und anorganischen Füllstoffpartikeln (wie etwa Salzen) zu einem Halbzeugformteil geformt, und dieses anschließend in nicht oxidierender Atmosphäre karbonisiert wird. Es wird ein kohlenstoffbasierter Formkörper erhalten, aus dem die partikelförmigen Füllstoffe herausgewaschen oder herausgebrannt, und so die Poren freigelegt werden.

Anwendungen des kohlenstoffbasierten Formkörpers für Elektroden wiederaufladbarer Lithiumionenbatterien erfordern jedoch ein Elektrodenmaterial, das in der Lage ist, Lithium reversibel ein- und auszulagern (zu interkalieren). Dabei werden möglichst kurze Aufladezeiten der Batterie angestrebt. Es hat sich gezeigt, dass für die "Schnellladefähigkeit" die reaktive Oberfläche der Elektrode, die sich aus ihrer geo-metrischen Oberfläche und der zusätzlichen Oberfläche aufgrund der inneren Porosität zusammensetzt, ein Schlüsselparameter ist.

Besonders große innere Oberflächen haben so genannte "Kohlenstoff-Aerogele", die durch Pyrolyse von Aerogelen auf Basis organischer Verbindungen hergestellt werden. Daraus hergestellte Elektrodenmaterialien zeigen wegen der großen Oberfläche jedoch einen relativ hohen "Ladungsverlust", der sich im Wesentlichen als irreversibler Verlust bei der ersten Interkalation von Lithium äußert.

Weiterhin sind Verfahren zur Herstellung von porösem Kohlenstoff unter Einsatz einer temporären Vorform aus porösem Material (eines so genannten "Templats") bekannt. Ein derartiges Verfahren wird in der DE 29 46 688 A1 beschrieben, aus der auch ein Verfahren zur Herstellung eines Kohlenstofferzeugnisses gemäß der eingangs genannten Gattung bekannt ist. Dabei wird Kohlenstoff in den Poren eines "Templats" aus anorganischem Matrixmaterial abgelagert, das eine Oberfläche von mindestens 1 m²/g aufweist. Als geeignete Matrixmaterialien für das Templat werden SiO₂-Gel, poröses Glas, Aluminiumoxid oder andere poröse hitzebeständige Oxide genannt. Das Matrixmaterial hat eine Porosität von mindestens 40 % und eine mittlere Porengröße im Bereich von 3 nm bis 2 µm.

Die Kohlenstoffablagerung erfolgt dabei in den Poren des Templats unter Einsatz eines polymerisierbaren organischen Materials, das als Flüssigkeit oder als Gas eingeführt wird und das anschließend innerhalb der Poren polymerisiert und karbonisiert wird. Nach der Polymerisierung und Karbonisierung wird das anorganische Matrixmaterial des Templats entfernt, beispielsweise durch Lösen in NaOH oder in Flusssäure.

Es wird ein kohlenstoffbasierter Formkörper erhalten, der eine Porenstruktur aufweist, die etwa der Materialverteilung des Templats entspricht.

Für eine gute Schnellladefähigkeit ist jedoch auch eine leichte Zugänglichkeit der inneren Oberflächen entscheidend. In dem Zusammenhang erweist sich eine so genannte "hierarchische Porosität" als vorteilhaft. Große Oberflächen können durch Poren im Nanometerbereich bereitgestellt werden. Um die Zugänglichkeit zu diesen Poren zu steigern, sind diese idealerweise über ein durchgängiges makroporöses Transportsystem verbunden.

Ein Kohlenstoffmonolith mit einer derartigen hierarchischen Porenstruktur aus Makroporen und Mesoporen gemäß der eingangs genannten Gattung ist in der US 2005/0169829 A1 beschrieben. Die Makroporen haben eine Porengröße im Bereich von 0,05 µm bis 100 µm, vorzugsweise im Bereich von 0,8 µm bis 10 µm, und die Mesoporen haben eine Porengröße im Bereich von 1,8 nm bis 50 nm, bevorzugt im Bereich von 5 bis 30 nm. Die Wandstärken der Gerüststruktur des Kohlenstoffmonoliths liegen im Bereich von 100 nm bis 20 µm.

Zur Herstellung der hierarchischen Porenstruktur wird ein SiO₂-Templat erzeugt. Hierzu wird eine Dispersion aus Siliciumdioxidkügelchen mit Durchmessern von 800 nm bis 10 µm und einer polymerisierbaren Substanz in eine Form gegeben, in der sie erhitzt wird, so dass durch Polymerisation ein poröses Silica-Gel erhalten wird, das nach dem Entfernen der überschüssigen Flüssigkeit getrocknet und vollständig auspolymerisiert wird.

Die Poren des so erhaltenen SiO₂-Templats werden anschließend mit einer Vorläufersubstanz für Kohlenstoff imprägniert, die Kohlenstoffvorläufersubstanz zu Kohlenstoff karbonisiert und das SiO₂-Templat anschließend durch Lösen in HF oder NaOH entfernt.

Die Herstellung der bekannten SiO₂-Templat erfordert einen hohen Zeit- und Materialaufwand, was insbesondere für Anwendungen für Massenartikel wie etwa Sekundärbatterien, bei denen es auf geringe Herstellkosten ankommt, nicht akzeptabel ist.

### Technische Aufgabenstellung

Der Erfindung liegt die Aufgabe zugrunde, ein Verfahren bereitzustellen, das eine preiswerte Herstellung eines Erzeugnisses aus porösem Kohlenstoff gestattet,

Weiterhin liegt der Erfindung die Aufgabe zugrunde, ein Matrixmaterial für eine Verwendung als Templat anzugeben.

Hinsichtlich des Verfahrens wird diese Aufgabe ausgehend von einem Verfahren der eingangs genannten Gattung erfindungsgemäß dadurch gelöst, dass das Herstellen des Templats einen Sootabscheideprozess umfasst, bei dem eine hydrolysierbare oder oxidierbare Ausgangsverbindung des Matrixmaterials einer Reaktionszone zugeführt, darin durch Hydrolyse oder Pyrolyse zu Matrixmaterial-Partikeln umgesetzt, die Matrixmaterial-Partikel agglomeriert oder aggregiert und zu dem Templat geformt werden.

Beim erfindungsgemäßen Verfahren umfasst die Herstellung des Templats einen Sootabscheideprozess. Dabei wird eine flüssige oder gasförmige Ausgangssubstanz einer chemischen Reaktion (Hydrolyse oder Pyrolyse) unterzogen und aus der Gasphase als Feststoffkomponente auf einer Ablagerungsfläche abgeschieden. Die Reaktionszone ist beispielsweise eine Brennerflamme oder ein Lichtbogen (Plasma). Mittels derartiger Plasma- oder CVD-Abscheideverfahren, die beispielsweise unter den Bezeichnungen OVD-, VAD-, MCVD-, PCVD- oder FCVD-Verfahren bekannt sind, werden im industriellen Maßstab synthetisches Quarzglas, Zinnoxid, Titannitrid und andere synthetische Werkstoffe hergestellt.

Dabei ist es für die Eignung des abgeschiedenen Matrixmaterials zur Herstellung eines Templats wesentlich, dass das Matrixmaterial auf der Ablagerungsfläche, bei der es sich beispielsweise um ein Gefäß, einen Dorn, eine Platte oder einen Filter handeln kann, als poröser "Ruß" (hier als "Soot" bezeichnet) anfällt. Dies wird gewährleistet, indem die Temperatur der Ablagerungsfläche so niedrig gehalten wird, dass ein Dichtsintern des abgeschiedenen Matrixmaterials verhindert wird. Als Zwischenprodukt wird ein so genannter "Sootkörper" erhalten oder "Sootstaub".

Bei dem Sootabscheideverfahren handelt es sich im Vergleich zu dem Herstellungsverfahren über die "Sol-Gel-Route" um ein preiswertes Verfahren, das eine kostengünstige Herstellung von Templaten für kohlenstoffbasierte Formkörper im industriellen Maßstab ermöglicht.

Dabei hat es sich als günstig erwiesen, dass mittels des Sootabscheideprozesses eine anisotrope Masseverteilung des Matrixmaterials mit hierarchischer Porenstruktur erzeugt wird.

Bei der Gasphasenabscheidung entstehen in der Reaktionszone Primärpartikel des Matrixmaterials mit Partikelgrößen im Nanometerbereich, die sich auf ihrem Weg zur Ablagerungsfläche zusammenlagern und in Form mehr oder weniger sphärischer Agglomerate oder Aggregate auf der Ablagerungsfläche anfallen, die im Folgenden auch als "Sekundärteilchen" bezeichnet werden. Je nach ihrem Entstehungsort innerhalb der Reaktionszone und ihrem Weg zur Ablagerungsfläche bestehen die Sekundärteilchen aus einer unterschiedlichen Anzahl von Primärpartikeln und zeigen daher grundsätzlich eine breite Teilchengrößenverteilung. Innerhalb der Sekundärteilchen - zwischen den Primärpartikeln - liegen besonders kleine Hohlräume und Poren im Nanometerbereich vor, also so genannte Mesoporen, wohingegen sich zwischen den einzelnen Sekundärteilchen größerer Hohlräume oder Poren ausbilden.

Bei Einsatz eines derartigen Matrixmaterials zur Herstellung eines Templats werden die inneren Oberflächen der Poren und Hohlräume beim Infiltrieren mit der kohlenstoffhaltigen Ausgangssubstanz belegt, so dass die im Templat vorgegebene Porenstruktur mehr oder weniger exakt auf das kohlenstoffbasierte Erzeugnis überführt wird, das daher eine dem Matrixmaterial entsprechende hierarchische Struktur mit oligomodaler Porengrößenverteilung aufweist.

Beim Sootabscheideprozess kann das Matrixmaterial in Form von Sootpulver anfallen, das anschließend anhand von Granulations-, Press-, Schlicker- oder Sinterverfahren zu Zwischenprodukten oder dem Templat weiterverarbeitet wird. Als Zwischenprodukte sind Granulate oder Schülpen zu nennen. Vorzugsweise umfasst der Sootabscheideprozess jedoch ein schichtweises Abscheiden der Matrixmaterial-Partikel auf einem relativ zur Reaktionszone bewegten Träger unter Bildung eines Sootkörpers.

Der so erhaltene monolithische Sootkörper - oder Teile davon - ist unmittelbar als Templat einsetzbar, wobei die monolithische Struktur das Infiltrieren gemäß Verfahrensschritt (b) erleichtert. Das schichtweise Abscheiden der Matrixmaterial-Partikel trägt zu einer anisotropen Masseverteilung im fertigen Matrixmaterial bei. Denn der durch schichtweises Abscheiden der Matrixmaterial-Partikel erhaltene Sootkörper weist zwangsläufig eine Schichtstruktur auf, bei der sich die Dichte zwischen den einzelnen Schichten von der Dichte innerhalb der Schichten des Matrixmaterials unterscheidet. Die Schichtstruktur des Sootkörpers, beziehungsweise des daraus erzeugten Templats, findet sich im Kohlenstofferzeugnis wieder und zeigt sich in einer plättchenartigen oder flockenartigen Morphologie.

In dem Zusammenhang hat es sich besonders bewährt, wenn die Matrixmaterial-Partikel auf einer Zylindermantelfläche eines um seine Längsachse rotierenden, langgestreckten Trägers unter Bildung eines hohlzylindrischen Sootkörpers abgeschieden werden.

Diese Methode der Gasphasenabscheidung ist als "OVD-Verfahren" (Outside Vapor Deposition) allgemein bekannt. Dabei werden Matrixmaterial-Partikel auf der Zylindermantelfläche eines um seine Längsachse rotierenden Trägers abgeschieden, so dass sich eine "spiralförmige Aufwicklung" der abgeschiedenen Matrixmaterial-Partikelschicht ergibt.

Die dadurch erzeugte schichtförmige, anisotrope Masseverteilung des Templats bewirkt in dem daraus hergestellten Kohlenstofferzeugnis ebenfalls eine ausgeprägte Schichtstruktur. Infolge dieser Morphologie kommt es leicht zu einer Separation zwischen Schichten, so dass das Kohlenstofferzeugnis in diesem Fall in Form gebogener Flocken (oder Plättchen) anfällt, wobei jedes Plättchen eine Schicht - in der Regel aber einer Vielzahl von Schichten - beinhaltet. Dieses Kohlenstofferzeugnis ist beispielsweise als Ausgangsmaterial für die Herstellung der Elektrode einer Lithiumionen-Batterie geeignet, wobei es sich aufgrund seiner hierarchischen Porenstruktur durch eine hohe Schnellladefähigkeit auszeichnet.

Vorteilhafterweise werden die Sootschichten mit einer mittleren Dicke im Bereich von 10 µm bis 200 µm, vorzugsweise im Bereich von 30 µm bis 100 µm, abgeschieden.

Schichtdicken von weniger als 10 µm können zu einer geringen mechanischen Stabilität des Sootkörpers führen. Bei Sootschichten mit einer Dicke von mehr als 200 µm wird es zunehmend schwieriger, diese gleichmäßig zu infiltrieren.

Es hat sich bewährt, wenn ein Templat mit einer mittleren relativen Dichte im Bereich von 10 % bis 25 %, vorzugsweise weniger als 20%, der theoretischen spezifischen Dichte des Matrixmaterials hergestellt wird.

Je geringer die Dichte des Templats ist, umso geringer sind der Verlust an Matrixmaterial und der Aufwand zum Entfernen desselben. Bei mittleren Dichten des Templats von weniger als 10 % ergibt sich jedoch eine geringe mechanische Stabilität auf, was die Handhabung des Templats erschwert. Die Dichte des porösen Templats wird beispielsweise durch die Oberflächentemperatur beim Sootabscheideprozess oder durch Druck und/oder Temperatur beim Pressen von partikelförmigem Matrixmaterial zu dem Templat eingestellt.

Bei einer bevorzugten Variante des erfindungsgemäßen Verfahrens wird das anorganische Matrixmaterial nach dem Kalzinieren gemäß Verfahrensschritt (c) entfernt.

Hierbei dient das anorganische Matrixmaterial lediglich als mechanisch und thermisch stabiles Gerüst zum Ablagern und Kalzinieren der Kohlenstoff-Vorläufersubstanz. Das resultierende Kohlenstofferzeugnis ist im Wesentlichen frei von Matrixmaterial, so dass auch der vorher von Matrixmaterial belegte Oberflächenbereich frei zugänglich ist. Das Kohlenstofferzeugnis zeigt daher eine hohe Kapazität bei Anwendungen, bei denen es auch eine hohe Oberfläche ankommt.

Bei einer alternativen, gleichermaßen bevorzugten Verfahrensweise, die insbesondere auf die Herstellung einer Elektrode für eine Lithiumionen-Batterie aus dem Kohlenstofferzeugnis abzielt, ist vorgesehen, dass das Matrixmaterial ein oxidischer Werkstoff ist, und dass das Kohlenstofferzeugnis und mindestens ein Teil des Matrixmaterials als Ausgangsmaterial zur Herstellung der Elektrode eingesetzt werden.

Bei Kurzschlüssen in Lithiumionen-Batterien kann es zu stark exothermen Reaktionen und zum explosionsartigen Abbrennen der Akkumulatoren kommen. Ein Anteil an Matrixmaterial aus oxidischem Werkstoff kann diese Gefahr verringern, da es die Elektroden zusätzlich stabilisiert. Es hat sich bewährt, wenn das Kohlenstofferzeugnis zu feinteiligem Kohlenstoff aus porösen Partikeln zerteilt wird.

Das Kohlenstofferzeugnis fällt beim erfindungsgemäßen Verfahren in der Regel als Monolith oder mit plättchen- oder flockenartiger Morphologie an und kann leicht zu kleineren Partikeln zerteilt werden. Die nach dem Zerteilen erhaltenen Partikel zeigen die auf die Sootabscheidung des Templats zurückzuführende hierarchische Porenstruktur und werden beispielsweise mittels üblicher Pasten- oder Schlickerverfahren zu Formkörpern oder Schichten weiterverarbeitet.

Vorzugsweise ist das Matrixmaterial SiO₂.

Synthetisches SiO₂ ist mittels Sootabscheideverfahren unter Einsatz preiswerter Ausgangssubstanzen im industriellen Maßstab relativ kostengünstig herstellbar. Das SiO₂-Templat hält hohen Temperaturen beim Kalzinieren stand. Die Temperaturobergrenze wird durch das Einsetzen der Reaktion von SiO₂ mit Kohlenstoff zu SiC (bei etwa 1000 °C) vorgegeben. Das Entfernen des Matrixmaterials in Form von synthetischem SiO₂ gemäß Verfahrensschritt (d) erfolgt durch chemische Auflösung.

Die Weiterverarbeitung des nach Verfahrensschritt (a) erhaltenen Templats erfolgt anhand der aus dem Stand der Technik bekannten Maßnahmen.

Beispielsweise kann sich eine Nachbehandlung des Templats als günstig erweisen, indem die innere Oberfläche mit funktionellen Gruppen versehen wird. Im Fall eines SiO₂-Templats bietet sich beispielsweise eine Funktionalisierung unter Einsatz von Silanen zur Hydrophobisierung, Siloxanen, Silazanen oder anderen organischen Materialien an. Weiterhin kommt zur Vergrößerung der freien Oberfläche vor dem Infiltrieren gemäß Verfahrensschritt (b) eine thermische Behandlung des SiO₂-Templats in Kombination mit einer aluminiumhaltigen Beschichtung zur Umsetzung in alumosilikatische Zeolithe in Betracht.

Die Infiltration der Poren des Templats mit Kohlenstoff oder einer Kohlenstoffvorläufersubstanz erfolgt durch den Einsatz fluider (gasförmiger oder flüssiger) Ausgangssubstanzen. Als graphitische Kohlenstoff-Vorläufersubstanzen kommen beispielsweise Lösungen von mesophasigem Pech oder Naphtol in Frage. Häufig werden auch nicht graphitische Kohlenstoff-Vorläufersubstanzen eingesetzt, wie Saccharose, Fructose oder Glucose. Die entsprechenden Substanzen werden in gelöster Form in das Templat infiltriert. Geeignete Lösungsmittel für die genannten graphitischen Vorläufersubstanzen sind beispielsweise Chloroform und Tetrahydrofuran (THF); während die genannten nicht-graphitischen Vorläufersubstanzen wasserlöslich sind.

Die Infiltration der Vorläufersubstanzen in das Templat erfolgt anhand der im Stand der Technik bekannten Verfahren, wobei insbesondere Tauchen, Pumpen und Schwenken zu nennen sind.

Das Kalzinieren des Grünkörpergerüstes gemäß Verfahrensschritt (c) erfolgt bei hoher Temperatur unter einem möglichst sauerstofffreien Gas oder unter Vakuum.

Das Entfernen des anorganischen Matrixmaterials gemäß Verfahrensschritt (d) erfolgt durch chemisches Inlösungbringen. Im Falle von SiO₂-Matrixmaterial sind als Lösungsmittel insbesondere Säuren (wie Flusssäure) oder Basen (wie Natriumhydroxyd) zu nennen.

Nach dem Entfernen des Matrixmaterials wird der so erhaltene porenhaltige Formkörper gespült und getrocknet und einer etwaigen Nachbehandlung zur weiteren Konfektionierung des Grundmaterials unterzogen. Hierbei sind insbesondere ein Kalzinieren unter Vakuum oder Inertgas bei hohen Temperaturen bis zu 3000 °C zur weiteren Graphitisierung zu nennen oder ein Kalzinieren unter oxidierender Atmosphäre bei Temperaturen bis zu etwa 400 °C zur selektiven Oxidation aktiver nicht graphitischer Zentren innerhalb des Monoliths.

Das so erhaltene Kohlenstofferzeugnis liegt in Form poröser Kohlenstoffflocken vor.

Derartige Kohlenstoffflocken fallen bei ihrer Herstellung über ein "Templat-Verfahren" an, wenn das Templat durch schichtweise Sootabscheidung anhand des erfindungsgemäßen Verfahrens erzeugt wird. Die so erhaltenen Kohlenstoffflocken oder -plättchen haben eine schichtförmige Morphologie und umfassen eine Kohlenstofflage, in der Regel jedoch eine Vielzahl einzelner Kohlenstofflagen. Jede Kohlenstofflage besteht aus einem porösen Kohlenstoffgerüst.

Die Kohlenstoffflocken bestehen aus porösem Kohlenstoff mit hierarchischer Porenstruktur, die sich aufgrund ihrer Herstellung durch Gasphasenabscheidung einstellt, wie oben anhand des erfindungsgemäßen Verfahrens bereits näher erläutert.

Sie eignen sich besonders gut für die Herstellung der Elektroden aufladbarer Lithiumionen-Batterien mit hoher Schnellladefähigkeit. Die Elektrode liegt dabei in Form einer Schicht aus Kohlenstoffpartikeln vor. An den Kontaktstellen zwischen diskreten Einzelpartikeln treten Übergangswiderstände auf, die die Elektronenleitung beeinträchtigen und die sich durch Alterung vergrößern können. Diesen Nachteil zeigen die vorliegenden Kohlenstoffflocken nicht. Denn diese setzen sich nicht aus diskreten, verschieblichen Einzelteilchen zusammen, sondern sie werden von einem Kohlenstoffgerüst oder von mehreren zusammenhängenden Kohlenstoffgerüsten gebildet.

Das Kohlenstoffgerüst ist für die Belegung durch Nanoteilchen geeignet und somit auch als Elektrodenmaterial eines Akkumulators, ebenso wie für die eingangs genannten Anwendungen einsetzbar.

Vorzugsweise weisen die Kohlenstoffflocken eine Schichtstruktur mit einer mittleren Schichtdicke im Bereich von 10 µm bis 200 µm, vorzugsweise im Bereich von 30 µm bis 100 µm, auf.

Die Schichtstruktur der Kohlenstoffflocken spiegelt die schichtförmige, anisotrope Masseverteilung des SiO₂-Templats wider. Schichtdicken von weniger als 10 µm können zu einer geringen mechanischen Stabilität der Kohlenstoffflocken führen. Kohlenstoffflocken mit einer Dicke von mehr als 200 µm sind über ihre Dicke zunehmend inhomogener.

Beim Einsatz der Kohlenstoffflocken zur Herstellung einer Elektrodenschicht eines Lithiumionen-Akkumulators ist die Schichtdicke der Kohlenstoffflocken im Idealfall in der Größenordnung der Dicke der Elektrodenschicht. Dadurch werden Übergangswiderstände zwischen kleineren, diskreten Kohlenstoffpartikeln vermieden oder vermindert.

Zur Herstellung einer derartigen Elektrodenschicht werden die Kohlenstoffflocken in einer Flüssigkeit dispergiert und mittels der bekannten Methoden zu der porösen Kohlenstoff-Schicht weiterverarbeitet.

In Bezug auf die Verwendung als Templat zur Herstellung eines Erzeugnisses aus porösem Kohlenstoff wird die oben genannte Aufgabe erfindungsgemäß dadurch gelöst, dass ein SiO₂-Sootkörper für diesen Zweck verwendet wird.

Synthetisches SiO₂ ist mittels Sootabscheideverfahren unter Einsatz preiswerter Ausgangssubstanzen im industriellen Maßstab relativ kostengünstig herstellbar. Sootkörper aus synthetischem SiO₂ zeichnen sich durch eine gute thermische Beständigkeit und durch eine anisotrope Porenverteilung aus, die diese unmittelbar für einen Einsatz als Templat geeignet macht.

### Ausführungsbeispiel

Nachfolgend wird die Erfindung anhand eines Ausführungsbeispiels und einer Zeichnung näher erläutert. Im Einzelnen zeigt
- **Figur 1**: eine Vorrichtung zur Herstellung eines SiO₂-Sootkörpers in schematischer Darstellung,
- **Figur 2**: eine computertomographische Aufnahme eines Sootkörpers in einer Ansicht in Richtung der Sootkörper-Längsachse,
- **Figur 3**: eine REM-Aufnahme Templats in Form eines SiO₂-Sootkörpers mit hierarchischer Porenstruktur,
- **Figur 4**: eine REM-Aufnahme des SiO₂-Sootkörpers mit 10-facher Vergrößerung gegenüber Figur 3,
- **Figur 5**: eine REM-Aufnahme eines unter Einsatz des Sootkörpers gemäß Figur 3 erhaltenen Kohlenstofferzeugnisses, und
- **Figur 6**: ein Diagramm zur Porengrößenverteilung des Kohlenstofferzeugnisses gemäß Figur 5, ermittelt durch Quecksilber-Porosimetrie.

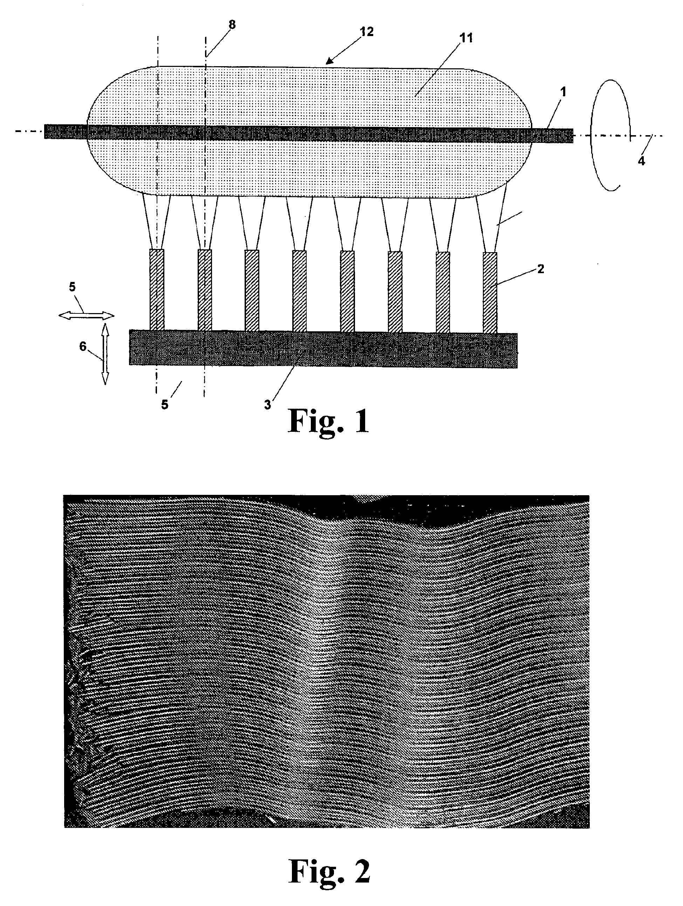

Die in **Figur 1** dargestellte Vorrichtung dient zur Herstellung eines SiO₂-Sootkörpers. Entlang eines Trägerrohres 1 aus Aluminiumoxid ist eine Vielzahl in einer Reihe angeordneter Flammhydrolysebrenner 2 angeordnet. Die Flammhydrolysebrenner 2 sind auf einem gemeinsamen Brennerblock 3 montiert, der parallel zur Längsachse 4 des Trägerrohrs 1 zwischen zwei, in Bezug auf die Längsachse 4 ortsfesten Wendepunkten hin- und herbewegt wird und der senkrecht dazu verschiebbar ist, wie dies die Richtungspfeile 5 und 6 andeuten. Die Brenner 2 bestehen aus Quarzglas; ihr Abstand zueinander beträgt 15 cm.

Den Flammhydrolysebrennern 2 ist jeweils eine Brennerflamme 7 zugeordnet, deren Hauptausbreitungsrichtung 8 senkrecht zur Längsachse 4 des Trägerrohrs 1 verläuft. Mittels der Flammhydrolysebrenner 2 werden auf der Zylindermantelfläche des um seine Längsachse 4 rotierenden Trägerrohrs 1 SiO₂-Partikel abgeschieden, so dass schichtweise der Rohling 11 mit einem Außendurchmesser von 400 mm aufgebaut wird. Die einzelnen SiO₂-Sootlagen haben im Mittel eine Dicke um 50 µm.

Den Flammhydrolysebrennern 2 werden jeweils als Brennergase Sauerstoff und Wasserstoff zugeführt sowie SiCl₄ als Einsatzmaterial für die Bildung der SiO₂-Partikel. Der Brennerblock 3 wird dabei mit einer Amplitude von zwei Brennerabständen (als 30 cm) hin- und herbewegt. Während des Abscheideprozesses stellt sich auf der Rohlingoberfläche 12 eine mittlere Temperatur von etwa 1200 °C ein.

Nach Abschluss des Abscheideprozesses wird ein Rohr aus porösem SiO₂-Soot (Sootrohr) mit einer Länge von 3 m, einem Außendurchmesser von 400 mm und einem Innendurchmesser von 50 mm erhalten. Das Temperatur beim Aufbau des Sootkörpers wird vergleichsweise niedrig gehalten, so dass das SiO₂-Sootmaterial eine geringe mittlere relative Dichte von 22 % (bezogen auf die Dichte von Quarzglas 2,21 g/cm³) hat.

Das Sootrohr wird einer computertomographischen Untersuchung (CT-Untersuchung) unterzogen. Dabei wird das Sootrohr über seine Länge mit Röntgenstrahlen durchstrahlt. Die so gewonnenen Aufnahmen lassen quantitative und qualitative Aussagen über die SiO₂-Masseverteilung und über Intensität und die Homogenität der axialen und radialen Schichtstruktur des Sootrohres zu.

**Figur 2** zeigt die entsprechende CT-Aufnahme. Bei dieser Aufnahmetechnik erscheinen Bereiche mit relativ hoher Dichte als helle Flächenbereiche. Anhand der deutlichen Helligkeitsunterschiede sind parallel zueinander verlaufende Sichten mit einer Schichtdicke um 50 µm deutlich erkennbar.

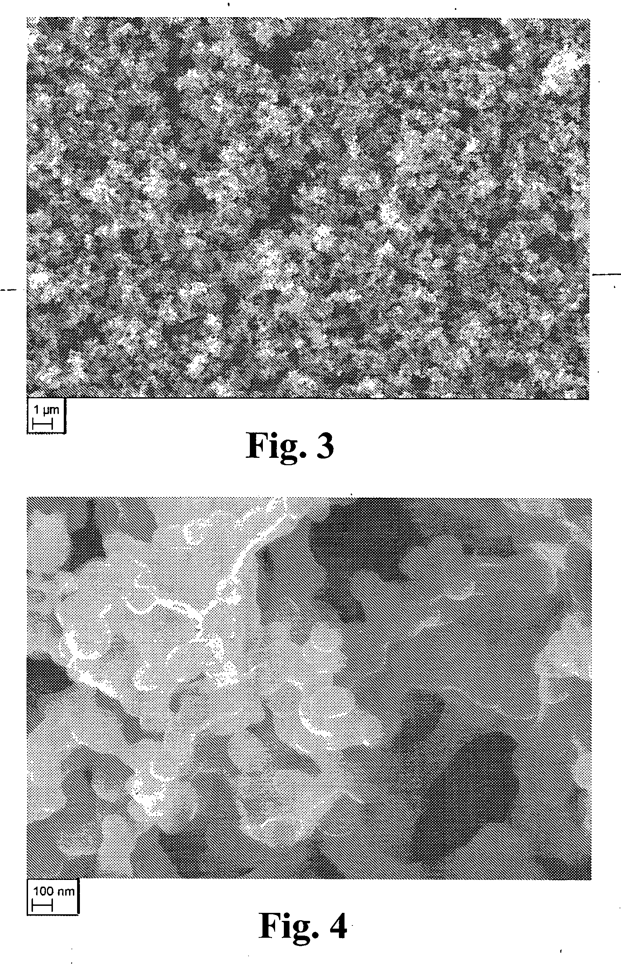

Die REM-Aufnahmen des Sootkörpers gemäß den **Figuren 3 und 4** zeigen eine Gerüststruktur mit einer Vielzahl zusammenhängender Poren und Hohlräume unterschiedlicher Größe. Aus Figur 4 ist insbesondere deutlich erkennbar, dass sich die Gerüststruktur aus einzelnen sphärischen und miteinander verwachsenen SiO₂-Sekundärteilchen zusammensetzt. Diese bilden eine feingliedrig zerklüftete Oberfläche, die von größeren Hohlräumen kanalartig durchzogen ist. Eine Messung der spezifischen inneren Oberfläche nach der BET-Methode (DIN ISO 9277, Mai 2003) ergibt Messwerte um 20 m²/g.

Der Sootkörper wird als Templat für die Herstellung von porösem Kohlenstoff eingesetzt. Hierfür wird der Sootkörper in ein Tauchbad einer Lösung von mesophasigem Pech in THF eingebracht. Das imprägnierte Material wird anschließend getrocknet. Diese Imprägnierungs- und Trocknungsschritte werden wiederholt, bis kein nennenswertes freies Porenvolumen mehr übrig bleibt.

Das so erhaltene Grünkörpergerüst aus Sootkörper und getrockneten Pechlagen wird durch Erhitzen in Stickstoff kalziniert. Es bildet sich eine gerüstartige Kompositstruktur aus Quarzglas und Kohlenstoff, die eine spezifische Oberfläche (nach BET) von etwa 100 m²/g aufweist. Die Erhöhung der spezifischen Oberfläche gegenüber dem SiO₂-Sootkörper ist möglicherweise auf eine Feinstrukturierung der Kohlenstoffbelegung zurückzuführen.

Das Entfernen des SiO₂-Matrixmaterials erfolgt durch Einbringen des imprägnierten Sootkörpers in ein Flusssäurebad. Nach dem Wegätzen des SiO₂-Gerüstes wird der so erhaltene Formkörper aus porösem Kohlenstoff gespült und getrocknet und einem weiteren Kalzinierschritt unter Vakuum bei einer Temperatur um 2500 °C zur weiteren Graphitisierung unterzogen.

Das so erhaltene Kohlenstofferzeugnis hat eine grafitähnliche, schichtförmige Ausbildung und setzt sich aus einer Vielzahl von Lagen plättchenförmiger oder flockenartiger Gebilde zusammen, die gebogen sind und leicht zerdrückt werden können. Die einzelnen papierähnlichen Lagen, die eine mittlere Dicke von etwa 50 µm haben, sind auf die ursprüngliche Schichtstruktur des SiO₂-Sootkörpers zurückzuführen.

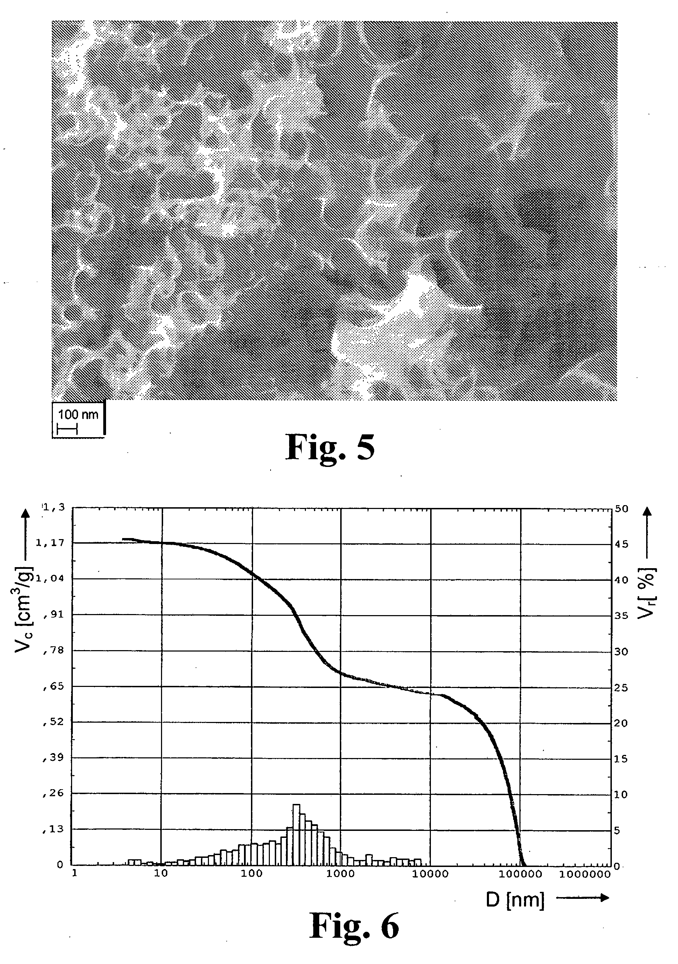

Die REM-Aufnahme von **Figur 5** zeigt die Porenstruktur des so erhaltenen Formkörpers aus porösem Kohlenstoff. Diese zeigt Negativabdrücke der ursprünglichen sphärischen SiO₂-Sekundärpartikel und ähnelt auch ansonsten der Porenstruktur des Templats. Insbesondere zeichnet sie sich durch eine hierarchische Porenstruktur aus, mit einer Vielzahl relativ großer Porenkanäle (Makroporen), welche eine ansonsten feingliedrig zerklüftete Oberflächenstruktur durchziehen. Eine Messung der spezifischen inneren Oberfläche nach der BET-Methode ergibt Messwerte um 200 m²/g, also etwa dem Doppelten der spezifischen Oberfläche des Kompositkörpers aus Kohlenstoff und Quarzglas.

Das Diagramm von **Figur 6** zeigt die Porengrößenverteilung des porösen Kohlenstoffs. Auf der linken Ordinate ist das kumulative Porenvolumen V_{c} in [cm³/g] und auf der rechten Ordinate das relative Porenvolumen Vᵣ in [%] gegen den Porendurchmesser D in [nm] aufgetragen. Dabei ist zu beachten, dass die gezeigten Messergebnisse mittels einer Quecksilber-Porosimetermessung erhalten wurden. Die Technik beruht auf der Intrusion der nicht benetzenden Flüssigkeit Quecksilber in ein poröses System unter Druck. Diese Methode liefert zuverlässige Informationen über die Porengrößenverteilung, das Porenvolumen, die Scheinbare und Wahre Dichte im Bereich von Makroporen bis zu großen Mesoporen, jedoch nicht für Poren im Nanometerbereich.

Es ist erkennbar, dass sich der poröse Kohlenstoff durch eine breite Porengrößenverteilung auszeichnet, die von 5 nm bis 100.000 nm reicht und die ein Maximum bei einer Porengröße um 400 nm zeigt. Die daraus ermittelte spezifische innere Oberfläche beträgt etwa 27 m²/g. Die Diskrepanz zu dem nach der BET-Methode ermittelten Wert von rund 200 m²/g ist dadurch zu erklären, dass die Poren im Nanometerbereich, die den größten Anteil zur gesamten inneren Oberfläche ausmachen, von dieser Messung nicht erfasst werden können.

Dieses Kohlenstofferzeugnis wird als Ausgangsmaterial für die Herstellung der Elektrode einer aufladbaren Lithiumionen-Batterie eingesetzt. Hierzu wird es zerkleinert und in einer Dispersion aufgenommen und anhand der üblichen Methoden zu der Elektrode verarbeitet. Die plättchen- oder flockenartige Morphologie der Teilchen und deren breite Porengrößenverteilung sowie die hierarchische Porenstruktur bleiben dabei erhalten. Dies ist Voraussetzung für eine hohe Schnellladefähigkeit der Lithiumionen-Batterie.

## Patentansprüche

1. Verfahren zur Herstellung eines porösen Kohlenstofferzeugnisses, umfassend folgende Verfahrensschritte:
(a) Herstellen eines monolithischen Templats aus anorganischem Matrixmaterial, das miteinander verbundene Poren aufweist,
(b) Infiltrieren der Poren des Templats mit Kohlenstoff oder einer Kohlenstoff-Vorläufersubstanz unter Bildung eines von Matrixmaterial umgebenen kohlenstoffhaltigen Grünkörpergerüsts, und
(c) Kalzinieren des Grünkörpergerüsts unter Bildung des porösen Kohlenstofferzeugnisses,
**dadurch gekennzeichnet, dass** das Herstellen des Templats einen Sootabscheideprozess umfasst, bei dem eine hydrolysierbare oder oxidierbare Ausgangsverbindung des Matrixmaterials einer Reaktionszone zugeführt, darin durch Hydrolyse oder Pyrolyse zu Matrixmaterial-Partikeln umgesetzt, die Matrixmaterial-Partikel agglomeriert oder aggregiert und zu dem Templat geformt werden.

2. Verfahren nach Anspruch 1, **dadurch gekennzeichnet, dass** mittels des Sootabscheideprozesses eine anisotrope Masseverteilung des Matrixmaterials mit hierarchischer Porenstruktur erzeugt wird.

3. Verfahren nach Anspruch 1 oder 2, **dadurch gekennzeichnet, dass** der Sootabscheideprozess ein schichtweises Abscheiden der Matrixmaterial-Partikel auf einem relativ zur Reaktionszone bewegten Träger unter Bildung eines Sootkörpers umfasst.

4. Verfahren nach Anspruch 3, **dadurch gekennzeichnet, dass** die Matrixmaterial-Partikel auf einer Zylindermantelfläche eines um seine Längsachse rotierenden, langgestreckten Trägers unter Bildung eines hohlzylindrischen Sootkörpers abgeschieden werden.

5. Verfahren nach Anspruch 3 oder 4, **dadurch gekennzeichnet, dass** Sootschichten mit einer mittleren Dicke im Bereich von 10 µm bis 200 µm, vorzugsweise im Bereich von 30 µm bis 100 µm, abgeschieden werden.

6. Verfahren nach einem der vorhergehenden Ansprüche, **dadurch gekennzeichnet, dass** das Kohlenstofferzeugnis in Form poröser Kohlenstoffflocken anfällt.

7. Verfahren nach einem der vorhergehenden Ansprüche, **dadurch gekennzeichnet, dass** ein Templat mit einer mittleren relativen Dichte im Bereich von 10 % bis 25 %, vorzugsweise weniger als 20%, der theoretischen spezifischen Dichte des Matrixmaterials hergestellt wird.

8. Verfahren nach einem der vorhergehenden Ansprüche, **dadurch gekennzeichnet, dass** das anorganische Matrixmaterial nach dem Kalzinieren gemäß Verfahrensschritt (c) entfernt wird.

9. Verfahren nach einem der Ansprüche 1 bis 7, **dadurch gekennzeichnet, dass** das Matrixmaterial ein oxidischer Werkstoff ist, und dass das Kohlenstofferzeugnis und mindestens ein Teil des Matrixmaterials als Ausgangsmaterial für die Herstellung einer Elektrode für eine Lithiumionen-Batterie eingesetzt wird.

10. Verfahren nach einem der vorhergehenden Ansprüche, **dadurch gekennzeichnet, dass** das Kohlenstofferzeugnis zu feinteiligem Kohlenstoff aus porösen Partikeln zerteilt wird.

11. Verfahren nach einem der vorhergehenden Ansprüche, **dadurch gekennzeichnet, dass** das Matrixmaterial SiO₂ ist.

12. Verwendung eines SiO₂-Sootkörpers als Templat zur Herstellung eines Erzeugnisses aus porösem Kohlenstoff.

## Claims

1. A method for producing a porous carbon product, comprising the following method steps:
(a) producing a monolithic template of inorganic matrix material that exhibits interconnected pores of the matrix material,
(b) infiltrating the pores of the template with carbon or a carbon precursor substance while forming a carbon-containing green-body skeleton surrounded by matrix material, and
(c) calcining the green body skeleton while forming the porous carbon product,
**characterized in that** the preparation of the template comprises a soot deposition process in which a hydrolyzable or oxidizable start compound of the matrix material is supplied to a reaction zone and converted therein by hydrolysis or pyrolysis so as to form matrix material particles, and the matrix material particles are agglomerated or aggregated and shaped into the template.

2. The method according to claim 1, **characterized in that** an anisotropic mass distribution of the matrix material with hierarchical pore structure is produced by means of the soot deposition process.

3. The method according to claim 1 or 2, **characterized in that** the soot deposition process comprises a layerwise deposition of the matrix material particles on a carrier moved relative to the reaction zone while forming a soot body.

4. The method according to claim 3, **characterized in that** the matrix material particles are deposited on a cylindrical outer surface of an elongated carrier rotating about a longitudinal axis thereof as to form a hollow cylindrical soot body.

5. The method according to claim 3 or 4, **characterized in that** the soot layers are deposited at a mean thickness ranging from 10 µm to 200 µm, preferably ranging from 30 µm to 100 µm.

6. The method according to any one of the preceding claims, **characterized in that** the carbon product is obtained in the form of porous carbon flakes.

7. The method according to any one of the preceding claims, **characterized in that** a template is made having a mean relative density in the range of 10% to 25%, preferably of less than 20%, of the theoretical specific density of the matrix material.

8. The method according to any one of the preceding claims, **characterized in that** the inorganic matrix material is removed after calcination according to method step (c).

9. The method according to any one of claims 1 to 7, **characterized in that** the matrix material is an oxidic material, and that the carbon product and at least part of the matrix material are provided as start material for producing an electrode for a lithium ion battery.

10. The method according to any one of the preceding claims, **characterized in that** the carbon product is divided into finely divided carbon of porous particles.

11. The method according to any one of the preceding claims, **characterized in that** the matrix material is SiO₂.

12. Use of a SiO₂ soot body as a template for producing a product of porous carbon.

## Revendications

1. Procédé de fabrication d'un produit poreux en carbone, comprenant les étapes de procédé suivantes:
(a) la fabrication d'une ébauche monolithique en matériau de matrice inorganique qui présente des pores interconnectés,
(b) l'infiltration des pores de la matrice par du carbone ou d'un précurseur carbone-carbone pour former un support de corps de base entouré par le matériau de matrice, contenant du carbone, et
(c) la calcination du support de corps de base pour former le produit poreux en carbone,
**caractérisé en ce que** la fabrication de l'ébauche comprend un processus de déposition de suie, où une liaison initiale hydrolysable ou oxydable du matériau de matrice est amenée à un processus, est transformée à l'intérieur par hydrolyse ou pyrolyse en particules de matériau de matrice qui sont agglomérées ou forment un agrégat et sont formées en une ébauche.

2. Procédé selon la revendication 1, **caractérisé en ce qu'**au moyen d'un processus de déposition de suie, une distribution de masse anisotrope du matériau de la matrice est générée avec une structure de pore hiérarchique.

3. Procédé selon la revendication 1 ou 2, **caractérisé en ce que** le processus de déposition de suie comprend un dépôt couche par couche des particules de matériau de matrice sur un substrat se déplaçant par rapport à la zone de réaction pour former un corps de suie.

4. Procédé selon la revendication 3, **caractérisé en ce que** les particules de matériau de matrice sont déposées sur une surface extérieure cylindrique d'un support allongé tournant autour de son axe longitudinal, pour former un corps de suie cylindrique creux allongé.

5. Procédé selon la revendication 3 ou 4, **caractérisé en ce que** des couches de silice présentant une épaisseur moyenne comprise entre 10 µm et 200 µm de préférence entre 30 µm 100 µm, sont déposées.

6. Procédé selon l'une quelconque des revendications précédentes, **caractérisé en ce que** le produit de carbone se présente sous la forme de flocons de carbone poreux.

7. Procédé selon l'une quelconque des revendications précédentes, **caractérisé en ce qu'**une matrice ayant une densité moyenne dans la plage de 10% à 25%, de préférence inférieure à 20% de la densité théorique de la matière de matrice spécifique, est réalisée.

8. Procédé selon l'une quelconque des revendications précédentes, **caractérisé en ce que** la matière de matrice inorganique, après calcination, conformément à l'étape de procédé (c) est supprimée.

9. Procédé selon l'une quelconque des revendications 1 à 7, **caractérisé en ce que** le matériau de matrice est un matériau oxydique, et que le produit de carbone est au moins une partie de la matière de matrice, sont utilisés comme produit de départ pour la production d'une électrode pour une batterie au lithium-ion.

10. Procédé selon l'une quelconque des revendications précédentes, **caractérisé en ce que** le produit de carbone est coupé à des particules finement divisées de carbone poreux.

11. Procédé selon l'une quelconque des revendications précédentes, **caractérisé en ce que** le matériau de matrice est SiO₂.

12. Utilisation d'un corps de suie SiO₂ comme ébauche pour la fabrication d'un produit de carbone poreux.
